# FASCICULE DE BREVET EUROPEEN

(11) **EP 1 699 661 B1**
(45) Date de publication et mention de la délivrance du brevet: **08.08.2012**
(21) Numéro de dépôt: 04816591.4
(22) Date de dépôt: 21.12.2004
(51) Int. Cl.: B60N 2/015, B60N 2/07, B60N 2/08

(54) **AGENCEMENT POUR LE MONTAGE D UN SIEGE SUR LE PLANCHER D'UN VEHICULE AU MOYEN DE PLOTS DE GUIDAGE ESCAMOTABLES**
HALTERUNG ZUR BEFESTIGUNG EINES SITZES AN EINEM KRAFTFAHRZEUGBODEN MITTELS EINZIEHBARER FÜHRUNGSBLÖCKE
FIXTURE FOR MOUNTING A SEAT ON A CAR FLOOR BY MEANS OF RETRACTABLE GUIDING BLOCKS

(30) Priorité: 26.12.2003 FR 0315445
(43) Date de publication de la demande: 13.09.2006
(73) Titulaire: Renault s.a.s., 92100 Boulogne Billancourt (FR)
(72) Inventeur: MICHELIN, Didier, F-78950 Cambrais (FR)
(86) Numéro de dépôt international: PCT/FR2004/050744
(87) Numéro de publication internationale: WO 2005/068247

(56) Documents cités:
- EP-A- 0 565 973
- EP-A- 1 334 865
- US-A- 5 655 816

## Description

La présente invention concerne un agencement pour le montage d'un sous-ensemble, notamment d'un siège, sur le plancher horizontal de l'habitacle d'un véhicule automobile.

La présente invention concerne plus particulièrement un agencement pour le montage d'un sous-ensemble, notamment d'un siège, sur le plancher horizontal de l'habitacle d'un véhicule automobile équipé d'au moins une paire de glissières longitudinales parallèles, respectivement gauche et droite, du type dans lequel chaque glissière a, en section par un plan vertical transversal, globalement un profil en C ouvert vers le haut, comportant au moins un repli dont le bord d'extrémité libre s'étend à l'extérieur du profil, du type dans lequel le sous-ensemble comporte un socle qui est muni d'au moins deux organes de guidage reçus en coulissement longitudinal, respectivement dans chacune des glissières, qui est muni d'au moins un organe de verrouillage du sous-ensemble dans une position longitudinale déterminée, et qui est muni de galets permettant de déplacer le sous-ensemble par roulement par rapport au plancher de l'habitacle.

Ce type d'agencement est en particulier destiné à faciliter l'aménagement de l'intérieur d'un véhicule automobile du type "monospace", qui doit présenter de grandes possibilités d'aménagement, et notamment une grande modularité tant qu'aux nombres de siège qu'au nombre de positions que les sièges sont susceptibles d'occuper.

Un tel type d'agencement est décrit par exemple dans le document EP-A-1.334.865, pour réduire des bruits inconfortables dus à des micro-déplacements verticaux.

Ce document décrit et représente la structure inférieure de support d'un siège de véhicule automobile.

Cette structure comporte ici deux sous-ensemble, respectivement gauche et droit, formant un piétement.

Chacun des sous-ensembles comprend un flasque rigide dont la partie inférieure est en forme de coulisseau pour circuler dans une glissière.

Dans ce document, les organes de guidage sont donc constitués par le flasque rigide formant coulisseau et les organes de verrouillage sont constitués par des fourchettes qui pivotent chacune autour d'un axe longitudinal entre une position verrouillée, dans laquelle la fourchette coopère avec des encoches réalisées dans la glissière, et une position de commande, dans laquelle les fourchettes sont rétractées pour permettre de retirer le piètement verticalement vers le haut.

Dans ce document, les organes de verrouillage constituent aussi les moyens de retenue verticale du siège auxquels doit être ajouté un organe de calage vertical qui est monté pivotant autour d'un axe vertical entre une position angulaire engagée et une position angulaire escamotée.

Cet agencement n'est pas complètement satisfaisant.

En effet, les organes de guidage longitudinal sont encombrants et lourds, ce qui contribue à augmenter le poids total du siège et le rend donc plus difficile à déplacer dans l'habitacle et à entreposer en dehors de l'habitacle du véhicule.

De plus, les organes de guidage longitudinal ne permettent pas la retenue verticale du siège sur le plancher de l'habitacle.

C'est pourquoi il est nécessaire d'ajouter des organes de verrouillage en nombre suffisant pour pouvoir retenir verticalement le siège dans les glissières.

L'invention vise à remédier à ces inconvénients en proposant un agencement qui facilite le déplacement des sièges ou du sous-ensemble, à la fois sur le plancher de l'habitacle du véhicule, et lorsqu'il est manipulé à l'extérieur du véhicule.

Dans ce but, l'invention propose un agencement du type décrit précédemment, caractérisé en ce que chaque organe de guidage comporte un plot vertical de guidage qui est muni, à son extrémité inférieure, d'une aile transversale horizontale de guidage, et qui est monté pivotant autour d'un axe sensiblement vertical, par rapport au socle, entre une position angulaire engagée, dans laquelle l'aile de guidage s'étend transversalement sous le repli de la glissière, et une position angulaire escamotée, dans laquelle l'aile est dégagée hors du repli, de manière à permettre de dégager le socle hors des glissières par soulèvement, et en ce qu'il comporte au moins un mécanisme d'escamotage qui commande le pivotement du plot de guidage entre sa position angulaire engagée et sa position angulaire escamotée.

Selon d'autres caractéristiques de l'invention :
- chaque plot de guidage est lié en pivotement à un bras d'escamotage, et le mécanisme d'escamotage est lié à chaque bras par une articulation, de manière à commander simultanément le pivotement de tous les plots de guidage entre la position engagée et la position escamotée ;
- le socle comporte au moins deux plots de guidage associés à la glissière gauche et au moins deux plots de guidage associés à la glissière droite ;
- le mécanisme d'escamotage comporte une tringle de commande gauche et une tringle de commande droite qui sont liées, respectivement aux bras d'escamotage des plots de guidage gauche et aux bras d'escamotage des plots de guidage droite, par des articulations correspondantes, de manière qu'un déplacement en translation longitudinale de chaque tringle provoque simultanément le pivotement de tous les plots de guidage associés ;
- au moins un repli d'au moins une glissière est pourvu d'encoches de verrouillage prévues pour recevoir de manière complémentaire une fourchette portée par l'organe de verrouillage, en vue d'immobiliser le sous-ensemble en translation longitudinale par rapport au plancher du véhicule, la fourchette est montée mobile, par rapport au socle, entre une position verrouillée, dans laquelle des pattes de la fourchette sont engagées dans les encoches de verrouillage, et une position déverrouillée, dans laquelle les pattes de la fourchette sont dégagées hors des encoches de verrouillage, et l'agencement comporte au moins un mécanisme de déverrouillage qui commande le déplacement de la fourchette vers sa position déverrouillée ;
- l'organe de verrouillage comporte un plot vertical de verrouillage qui est muni, à son extrémité inférieure, d'au moins une aile transversale horizontale formant fourchette de verrouillage, et portant, sur sa face supérieure, au moins une patte de verrouillage qui est prévue pour être reçue de manière complémentaire dans une encoche de verrouillage, et le plot de verrouillage est monté coulissant suivant un axe vertical, par rapport au socle, entre une position haute verrouillée, dans laquelle la patte de la fourchette est reçue dans une encoche de verrouillage, et une position basse déverrouillée, dans laquelle la patte de la fourchette est dégagée vers le bas hors des encoches de verrouillage ;
- un élément élastique de rappel est interposé axialement entre une portion du plot de verrouillage et une portion du socle, de manière à solliciter élastiquement le plot de verrouillage vers sa position haute verrouillée, et le mécanisme de déverrouillage comporte un levier qui vient en appui axial contre une portée aménagée dans l'extrémité supérieure du plot de verrouillage, et qui pivote entre une position angulaire de repos et une position angulaire de déverrouillage provoquant le coulissement axial du plot de verrouillage vers sa position déverrouillée, à l'encontre de l'effort de rappel de l'élément élastique ;
- le plot de verrouillage est monté pivotant autour d'un axe sensiblement vertical, par rapport au socle, entre une position angulaire engagée, dans laquelle la fourchette s'étend transversalement sous le repli de la glissière, et une position angulaire escamotée, dans laquelle la fourchette est dégagée hors du repli, de manière à permettre de dégager le socle hors des glissières par soulèvement, en ce que le plot de verrouillage est lié en pivotement à un bras d'escamotage, et le mécanisme d'escamotage est lié au bras d'escamotage du plot de verrouillage par une articulation, de manière à commander simultanément le pivotement des plots de guidage et des plots de verrouillage entre leur position engagée et leur position escamotée ;

- la glissière comportant deux replis qui sont chacun pourvus d'encoches de verrouillage, la fourchette de verrouillage comporte deux ailes transversales horizontales qui sont agencées de part et d'autre du plot de verrouillage, qui sont pourvues chacune d'au moins une nervure formant patte de verrouillage sur la face supérieure de la fourchette, et, en position verrouillée, les nervures s'étendent globalement suivant une direction transversale ;
- la fourchette de verrouillage est montée pivotante autour d'un axe sensiblement longitudinal, par rapport au socle, entre une position angulaire verrouillée et engagée, dans laquelle les pattes de la fourchette sont reçues dans les encoches de la glissière, et une position angulaire déverrouillée et escamotée, dans laquelle les pattes de la fourchette sont dégagées hors des encoches, en ce qu'un élément élastique de rappel est interposé entre une portion de la fourchette et une portion du socle, de manière à solliciter élastiquement la fourchette vers sa position angulaire verrouillée et engagée, et le mécanisme de déverrouillage comporte un levier qui vient en appui axial contre une portée aménagée dans une portion de la fourchette, et qui pivote entre une position angulaire de repos et une position angulaire de déverrouillage provoquant le pivotement de la fourchette vers sa position déverrouillée et dégagée, à l'encontre de l'effort de rappel de l'élément élastique ;
- le mécanisme d'escamotage est lié au mécanisme de déverrouillage par un mécanisme à came, de manière à provoquer le déverrouillage de l'organe de verrouillage au plus tard à la fin de l'escamotage des organes de guidage et de l'organe de verrouillage ;

- le mécanisme d'escamotage comporte une barre transversale d'escamotage pivotant autour d'un axe transversal entre une position angulaire d'engagement et une position angulaire d'escamotage, et le levier de déverrouillage comporte une surface de commande qui coopère par contact avec un dispositif suiveur de came lié en pivotement à la barre d'escamotage, de manière que le pivotement de la barre d'escamotage vers sa position d'escamotage provoque le basculement du levier de déverrouillage vers sa position de déverrouillage ;
- au moins une tringle de commande comporte une lumière de commande prévue pour recevoir un pion lié en déplacement longitudinal à la barre d'escamotage de manière que, au cours d'une première course angulaire de la barre d'escamotage, le pion se déplace dans la lumière de commande sans provoquer de déplacement correspondant des tringles, et de manière que, au cours d'une seconde course angulaire de la barre d'escamotage, le pion vienne en appui contre un bord de la lumière de commande pour provoquer un déplacement longitudinal des tringles vers leur position correspondant à l'escamotage des plots de guidage et des plots de verrouillage ;
- chaque glissière comporte, sur sa face externe supérieure, au moins une piste de roulement longitudinale qui est inclinée, transversalement à la direction longitudinale, suivant une pente inversée par rapport à la glissière associée, et en ce que la bande de roulement de chaque galet a une forme globalement tronconique qui est sensiblement complémentaire de la piste de roulement de la glissière associée, de manière à permettre le centrage du sous-ensemble par rapport à la paire de glissières, lors de la mise en place des organes de guidage dans les glissières ;
- les galets associés à la glissière droite, ou à la glissière gauche, sont montés avec un débattement transversal de valeur déterminée, par rapport au socle, de manière à compenser une dispersion de parallélisme entre les deux glissières ;
- le socle comporte deux organes de verrouillage secondaires qui sont agencés à une extrémité longitudinale du socle et qui sont prévus pour coopérer chacun avec les encoches de verrouillage d'une glissière distincte de manière à retenir verticalement et longitudinalement le sous-ensemble sur le plancher de l'habitacle, lorsque le sous-ensemble occupe une position basculée longitudinalement vers J'avant ou vers l'arrière.

D'autres caractéristiques et avantages de l'invention apparaîtront à la lecture de la description détaillée qui suit pour la compréhension de laquelle on se reportera aux dessins annexés dans lesquels :
- la figure 1 est une vue de côté qui représente un agencement pour le montage d'un siège sur le plancher d'un habitacle de véhicule automobile conforme aux enseignements de l'invention ;
- la figure 2 est une vue de dessous qui représente les chariots portant les organes de guidage et les organes de verrouillage montés sur le socle du siège de la figure 1 ;
- les figures 3 et 4 sont des vues suivant le plan de coupe 3-3 qui représentent un organe de guidage respectivement en position engagée et en position escamotée ;
- les figures 5 et 6 sont des vues suivant le plan de coupe 5-5 qui représentent un organe de verrouillage respectivement en position verrouillée et en position déverrouillée ;
- la figure 7 est une vue suivant le plan de coupe 7-7 qui représente un organe de verrouillage en position escamotée ;
- les figures 8 et 9 sont des vues suivant le plan de coupe 8-8 qui représentent les positions respectivement engagée et escamotée de l'organe de verrouillage et de l'organe de guidage d'un chariot ;
- la figure 10 est une vue en perspective avec arrachement qui représente le mécanisme à came reliant le mécanisme d'escamotage au mécanisme de déverrouillage ;
- la figure 11 est une vue de côté qui représente le mécanisme d'escamotage en position d'engagement et le mécanisme de déverrouillage en position de repos ;
- la figure 12 est une vue similaire à celle de la figure 11 qui représente le mécanisme d'escamotage en position d'engagement et le mécanisme de déverrouillage en position déverrouillée ;
- la figure 13 est une vue similaire à celle de la figure 11 qui représente le mécanisme d'escamotage dans une position angulaire intermédiaire correspondant à la position déverrouillée du mécanisme de déverrouillage ;
- la figure 14 est une similaire à celle de la figure 11 qui représente le mécanisme d'escamotage en position d'escamotage.
- la figure 15 est une vue selon le plan de coupe 15-15 qui représente une variante de réalisation de l'organe de verrouillage ;
- la figure 16 est une vue de côté qui représente l'organe de verrouillage de la figure 15 et une variante de réalisation du chariot portant l'organe de guidage ;
- la figure 17 est une vue de dessus qui représente l'organe de verrouillage et le chariot de la figure 16 ;
- la figure 18 est une vue selon le plan de coupe 18-18 qui représente un organe de verrouillage secondaire ;
- la figure 19 est une vue de côté qui représente l'organe de verrouillage secondaire ;
- la figure 20 est une vue de dessus qui représente l'organe de verrouillage secondaire.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

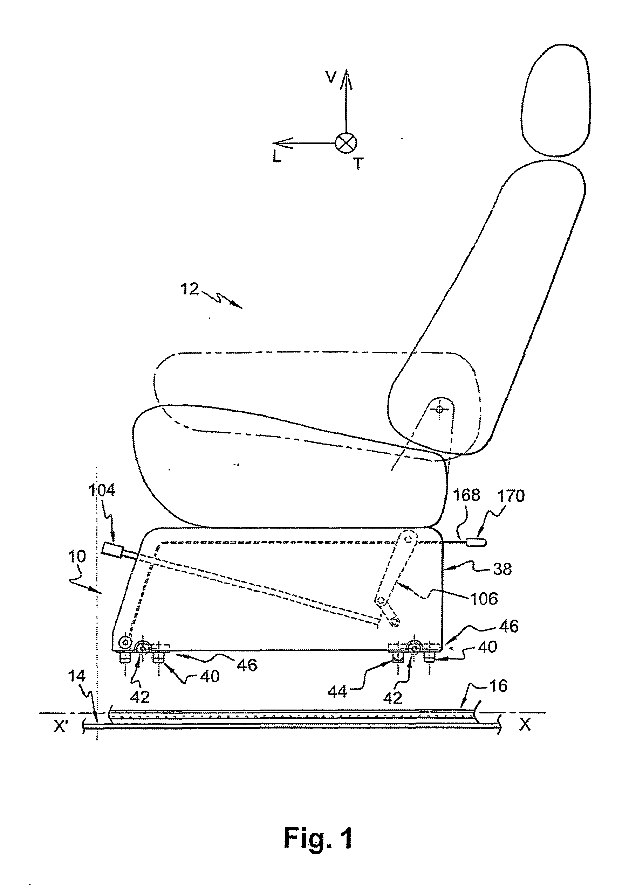

Sur la figure 1, on a représenté un exemple d'agencement 10 pour le montage d'un sous-ensemble 12 sur le plancher horizontal 14 de l'habitacle d'un véhicule automobile.

Le sous-ensemble 12 est constitué ici par un siège de véhicule automobile.

Bien entendu, d'autres types de sous-ensemble pourraient être montés sur le plancher 14, tels qu'un coffre de rangement, une tablette mobile, etc.

Le plancher 14 de l'habitacle est équipé d'une paire de glissières longitudinales parallèles 16, respectivement gauche et droite.

Les deux glissières 16 sont ici identiques. Elles ont globalement un profil en C ouvert vers le haut, en section par un plan vertical transversal.

La direction longitudinale L correspond ici à l'axe longitudinal du véhicule, et elle est orientée de l'avant vers l'arrière, c'est-à-dire de la gauche vers la droite en considérant la figure 1.

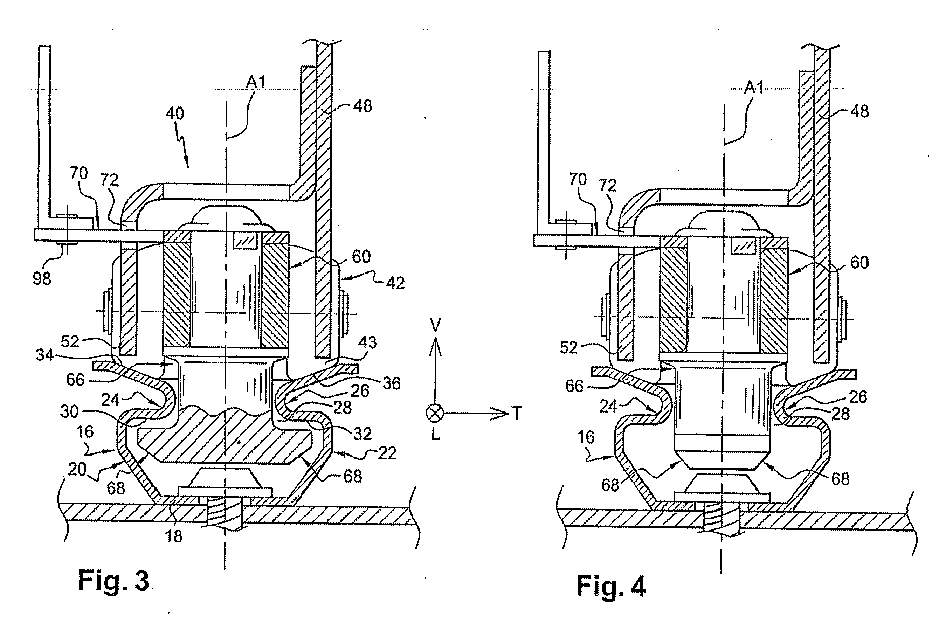

La direction transversale T est orientée de la gauche vers la droite, ce qui correspond à l'orientation de la figure 3.

Sur la figure 3, une glissière 16 est représentée en coupe transversale.

Selon le mode de réalisation représenté ici, chaque glissière 16 est composée d'une âme 18 bordée par deux ailes 20, 22 équipées, à leur extrémités libres respectives, d'un repli 24, 26 délimitant, avec le repli 24, 26 en vis-à-vis, une rainure 28.

Chaque repli 24, 26 engendre longitudinalement une surface transversale horizontale inférieure 30, 32, et des pistes supérieures de roulement 34, 36, qui sont inclinées, transversalement à la direction longitudinale L.

Les pistes de roulement 34, 36 sont ici inclinées en descente vers la rainure 28.

Selon le mode de réalisation représenté ici, les replis 24, 26 de chaque glissière 16 sont pourvus d'encoches transversales de verrouillage 37 dans leurs surfaces transversales inférieures 30, 32 respectives.

Ce type de glissière 16 présente l'avantage de pouvoir être formée par galetage, après avoir découpé les encoches 37. Ce procédé de fabrication est moins onéreux que l'usinage d'un profilé.

Le siège 12 comporte un socle 38 qui est muni d'au moins deux organes de guidage 40 qui sont prévus pour être reçus en coulissement longitudinal, respectivement dans chacune des glissières 16.

Les organes de guidage 40 ont aussi pour fonction de retenir verticalement le siège 12 dans les glissières 16, et de permettre l'extraction du siège 12 des glissières 16 en s'escamotant, comme on le verra par la suite.

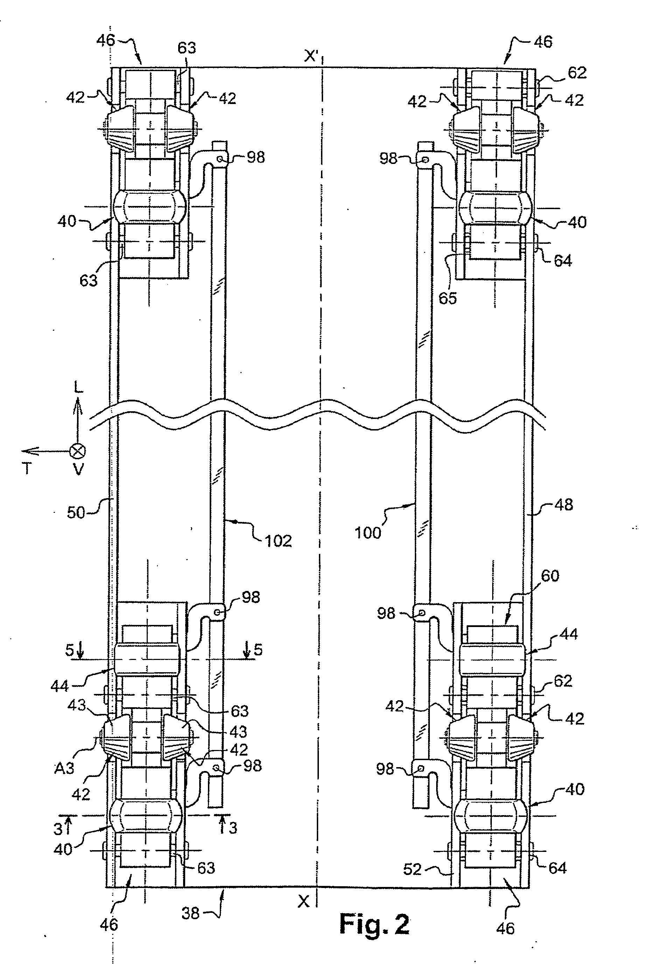

Comme on peut le voir notamment sur la figure 2, le socle 38 comporte ici quatre organes de guidage 40 similaires.

Le socle 38 comporte aussi des galets 42 qui permettent de déplacer le siège 12 par rapport au plancher 14 de l'habitacle par roulement, ici par roulement sur les glissières 16, et deux organes de verrouillage 44 qui sont prévus pour coopérer avec les encoches de verrouillage 37 en vue de bloquer le siège 12 en position réglée longitudinalement.

De préférence, chaque galet 42 comporte une bande de roulement 43 de forme globalement tronconique, sensiblement complémentaire de la piste de roulement associée 34, 36 de la glissière 16.

La coopération entre les pistes de roulement inclinées 34, 36 et les bandes de roulement tronconiques 43 permet de faciliter le centrage du siège 12 par rapport à la paire de glissières 16, lors de la mise en place des organes de guidage 40 dans les glissières 16.

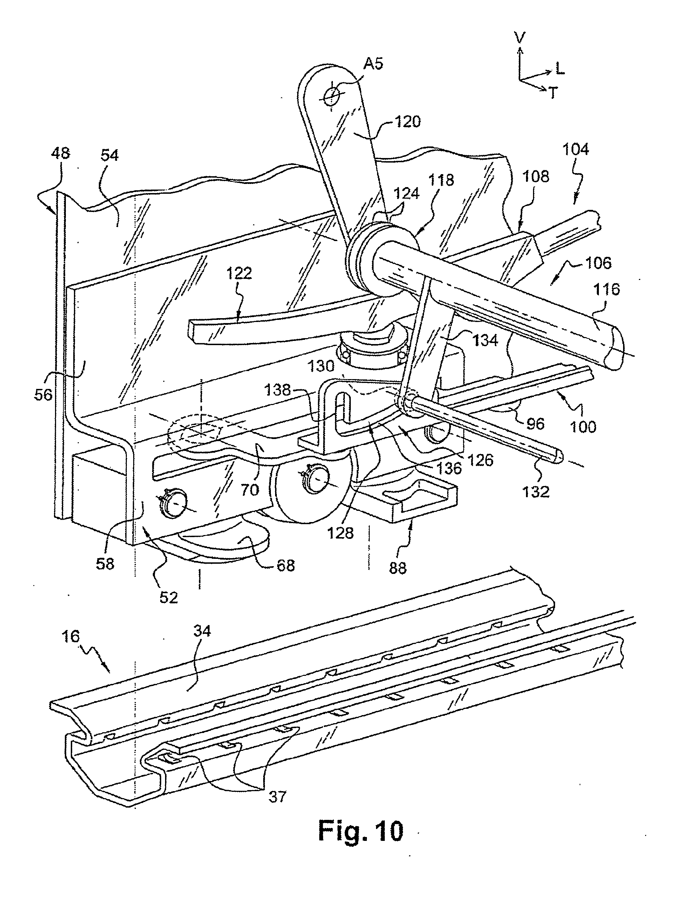

Selon le mode de réalisation représenté ici, les organes de guidage 40, les galets 42, et les organes de verrouillage 44 sont portés par des chariots 46 qui sont fixés sous le socle 38, comme on peut le voir notamment sur la figure 2 et sur la figure 10.

On note que, comme la figure 2 est une vue de dessous du socle 38, l'orientation de la direction transversale T y est inversée, de sorte que les éléments situés du côté gauche du socle 38 se trouvent à droite sur la figure 2, et les éléments situés du côté droit du socle 38 se trouvent à gauche sur la figure 2.

Le socle 38 comporte ici, à chacune de ses extrémités transversales, une plaque longitudinale latérale, respectivement gauche 48 et droite 50, qui s'étend verticalement vers le bas.

Chaque plaque latérale 48, 50 comporte, à chacune de ses extrémités longitudinales, une plaque de support 52 qui est fixée sur la paroi interne 54 de la plaque latérale 48, 50.

De manière arbitraire, des éléments seront qualifiés d'internes lorsqu'ils sont agencés du côté de l'axe longitudinal central X'X du socle 38.

Chaque plaque de support 52 comporte une portion supérieure de fixation 56, qui est adjacente à la paroi interne 54 du socle 38, et une portion inférieure de support 58, qui est parallèle à la paroi interne 54 et qui est décalée transversalement vers l'intérieur, de manière à délimiter un espace transversal prévu pour recevoir un chariot 46.

L'agencement 10 selon l'invention comporte ici quatre chariots 46 agencés globalement aux quatre coins du socle 38.

Chaque chariot 46 comporte ici un châssis 60 de forme globalement parallélépipédique qui est monté dans l'espace transversal entre une plaque latérale 48, 50 et une plaque de support 52 associée.

Le châssis 60 est fixé sur la plaque latérale 48, 50 et sur la plaque de support 52 au moyen de deux paliers transversaux 62, 64. Chaque chariot 46 est donc monté fixe, longitudinalement, par rapport au socle 38.

Avantageusement, les deux chariots 46 agencés d'un côté du socle 38, ici du côté droit, sont montés sur des paliers transversaux glissants 63, avec un débattement transversal de valeur déterminée, par exemple trois millimètres, par rapport au socle 38, de manière à compenser une dispersion de parallélisme entre les glissières 16 de la paire, lors de la mise en place des organes de guidage 40 dans les glissières 16.

Les deux chariots 46 agencés ici du côté gauche du socle 38 sont montés sans débattement transversal par rapport au socle 38. Ils comportent, à cet effet, des entretoises 65 qui sont intercalées transversalement entre le châssis 60 et la plaque latérale 48 ou la plaque de fixation 52 en vis-à-vis.

Chaque chariot 46 porte ici un organe de guidage 40 et une paire de galets 42.

De plus, les deux chariots 46 agencés à l'arrière du socle 38 sont pourvus chacun d'un organe de verrouillage 44.

Selon le mode de réalisation représenté ici, les galets 42 de chaque paire sont montés libre à rotation, autour d'un axe transversal A3, de part et d'autre du châssis 60 du chariot 46.

Les galets 42 sont agencés sur le chariot 46 de manière que le diamètre de la piste de roulement 43 du galet 42 soit croissant vers le châssis 60.

On décrit maintenant un organe de guidage et de retenue verticale 40, notamment en référence aux figures 3 et 4.

L'organe de guidage 40 représenté ici est monté sur le côté gauche du socle 38.

L'organe de guidage 40 comporte un plot vertical de guidage 66 qui est monté pivotant autour d'un axe A1 sensiblement vertical, sur le châssis 60 d'un chariot 46, entre une position angulaire engagée et une position angulaire escamotée.

Le tronçon supérieur du plot de guidage 66 est monté pivotant à travers le châssis 60 et le tronçon inférieur du plot de guidage 66 s'étend axialement à l'intérieur de la glissière 16.

Le plot de guidage 66 est muni, à son extrémité axiale inférieure, de deux ailes transversales horizontales de guidage 68 qui s'étendent de part et d'autre de l'axe A1.

Dans la position angulaire engagée, qui est représentée sur la figure 3, les deux ailes de guidage 68 s'étendent globalement suivant une direction transversale, respectivement sous les deux replis 24, 26 de la glissière 16.

Dans la position angulaire escamotée, qui est représentée sur la figure 4, les deux ailes de guidage 68 s'étendent suivant une direction longitudinale, en regard verticalement de la rainure 28, de sorte qu'elles sont dégagées hors des deux replis 24, 26.

La position angulaire escamotée permet de dégager le plot de guidage 66 hors de la glissière 16 selon un mouvement orienté globalement verticalement vers le haut.

Chaque plot de guidage 66 est lié en pivotement, par son extrémité axiale supérieure, à un levier dit bras d'escamotage 70, qui permet de commander le pivotement du plot de guidage 66 entre ses deux positions angulaires.

Chaque bras d'escamotage 70 s'étend ici vers l'intérieur du socle 38, au travers d'une fenêtre 72 aménagée dans la plaque de support associée 52.

La dimension longitudinale de la fenêtre 72 est suffisante pour permettre le basculement du bras d'escamotage 70 entre ses deux positions angulaires, correspondant respectivement aux positions escamotée et engagée du plot de guidage 66 associé.

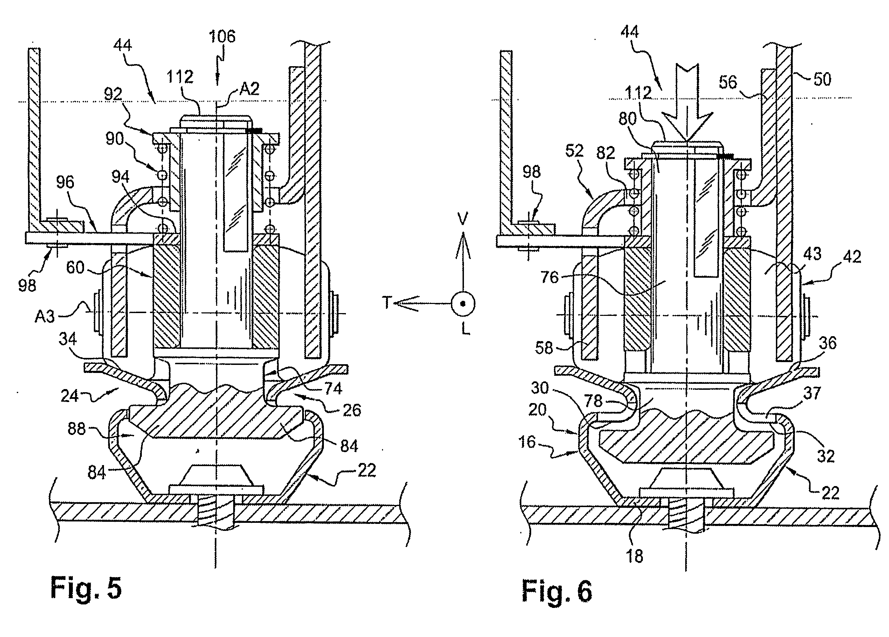

On décrit maintenant un organe de verrouillage 44, notamment en référence aux figures 5, 6 et 7.

L'organe de verrouillage 44 représenté ici est monté sur le côté droit du socle 38.

L'organe de verrouillage 44 comporte un plot vertical de verrouillage 74 qui est monté pivotant autour d'un axe A2 sensiblement vertical, sur le châssis 60 d'un chariot 46, entre une position angulaire engagée et une position angulaire escamotée.

De plus, le plot de verrouillage 74 est monté coulissant, suivant son axe vertical A2, par rapport au châssis 60, entre une position haute verrouillée et une position basse déverrouillée.

Le tronçon intermédiaire 76 du plot de verrouillage 74 est monté pivotant et coulissant à travers le châssis 60, le tronçon inférieur 78 du plot de verrouillage 74 s'étend axialement à l'intérieur de la glissière 16, et le tronçon supérieur 80 du plot de verrouillage 74 s'étend axialement au-dessus du châssis 60, à travers une ouverture associée 82 de la plaque de support 52.

Le plot de verrouillage 74 est muni, à son extrémité axiale inférieure, de deux ailes transversales horizontales de verrouillage 84 qui s'étendent de part et d'autre de l'axe de coulissement A2.

Chaque aile 84 du plot de verrouillage 74 comporte, sur sa face supérieure, deux nervures parallèles 86 formant pattes de verrouillage, qui s'étendent suivant une direction transversale, lorsque le plot de verrouillage 74 occupe sa position verrouillée, pour être reçues de manière complémentaire dans les encoches de verrouillage 37.

Les ailes de verrouillage 84 du plot 74 forment ainsi une fourchette de verrouillage 88.

Un élément élastique de rappel, ici un ressort hélicoïdal de compression axiale 90, est interposé verticalement entre une coupelle d'appui 92, qui est montée à l'extrémité axiale supérieure du plot de verrouillage 74, et une surface d'appui 94 agencée sur la face supérieure du châssis 60.

Le ressort 90 sollicite axialement le plot de verrouillage 74 vers sa position haute verrouillée.

Les positions angulaires engagée et escamotée du plot de verrouillage 74 sont similaires aux positions correspondantes des plots de guidage 66.

Les positions verrouillée et déverrouillée du plot de verrouillage 74 seront décrites lorsque ledit plot 74 occupe sa position engagée, la position escamotée ne permettant aucun verrouillage.

En position haute verrouillée, les ailes de verrouillage 84 s'étendent globalement transversalement de manière que les nervures 86 soient reçues de manière complémentaire dans les encoches de verrouillage 37. Les ailes de verrouillage 84 sont sensiblement en appui axial vers le haut contre les replis 24, 26 de la glissière16.

La position verrouillée permet d'immobiliser longitudinalement le socle 38 dans les glissières 16 et de retenir verticalement le socle 38 dans les glissières 16.

En position basse déverrouillée, les ailes de verrouillage 84 sont décalées axialement vers le bas de manière que les nervures 86 soient dégagées hors des encoches de verrouillage 37.

Avantageusement, le plot de verrouillage 74 comporte un bras d'escamotage 96 qui est similaire au bras d'escamotage 70 associé à chaque plot de guidage 66, et qui permet de commander le pivotement du plot de verrouillage 74 entre ses deux positions angulaires.

Avantageusement, les extrémités libres de tous les bras d'escamotage 70, 96 agencés d'un même côté du socle 38 sont liées à une tringle de commande 100, 102 associée par une articulation verticale 98.

Ainsi, un déplacement en translation longitudinale de chaque tringle 100, 102 permet de provoquer simultanément le pivotement des deux plots de guidage 66 et du plot de verrouillage 74 associé.

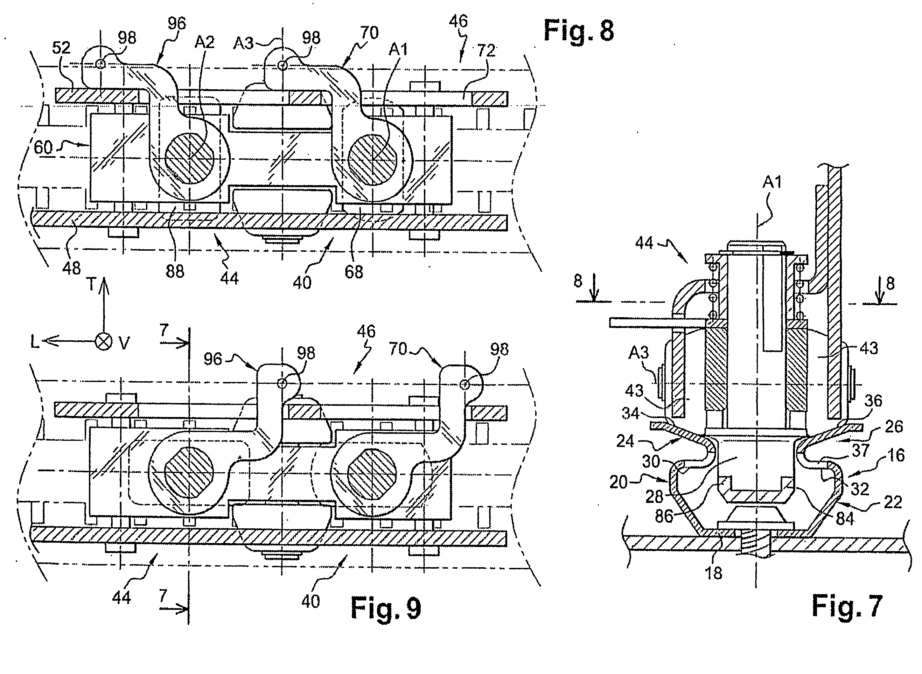

Les figures 8 et 9 illustrent le pivotement simultané du plot de guidage 66 et du plot de verrouillage 74 portés par le chariot arrière 60 agencé du côté gauche du socle 38.

L'agencement 10 selon l'invention comporte un mécanisme de déverrouillage 104 qui commande le coulissement des plots de verrouillage 74 vers leurs positions de déverrouillage respectives, et un mécanisme d'escamotage 106 qui commande le pivotement des plots de guidage 66 et des plots de verrouillage 74 entre leurs positions engagée et escamotée respectives.

Les mécanismes de commande 104, 106 et leur fonctionnement sont illustrés notamment par les figures 10 à 14.

Le mécanisme de déverrouillage 104 comporte un levier de déverrouillage 108 associé à chaque organe de verrouillage 44.

Chaque levier de déverrouillage 108 est monté à pivotement autour d'un axe transversal A4 agencé longitudinalement en avant, par rapport à l'organe de verrouillage associé 44.

Le levier de déverrouillage 108 comporte une surface transversale inférieure, ici en forme de bossage 110, qui est prévue pour venir en appui axial contre une portée 112 aménagée dans l'extrémité axiale supérieure du plot de verrouillage associé 74.

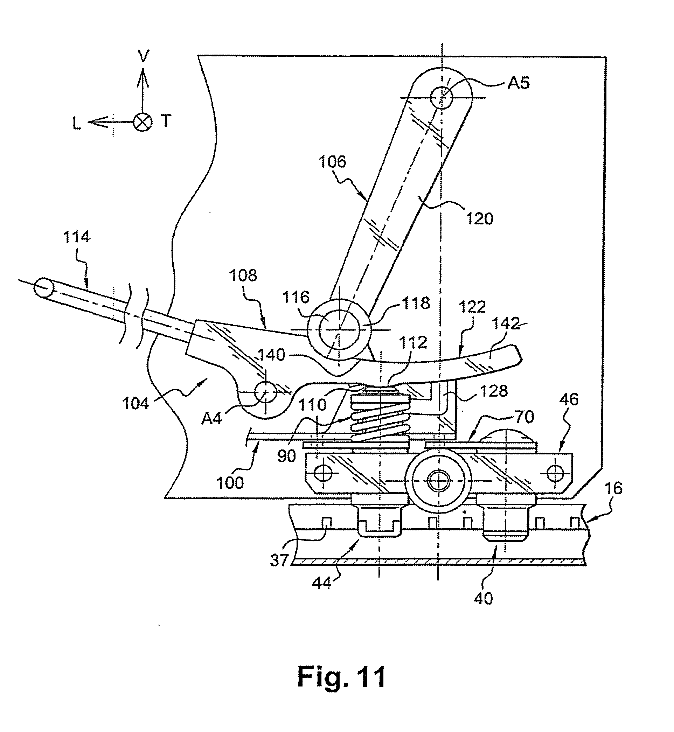

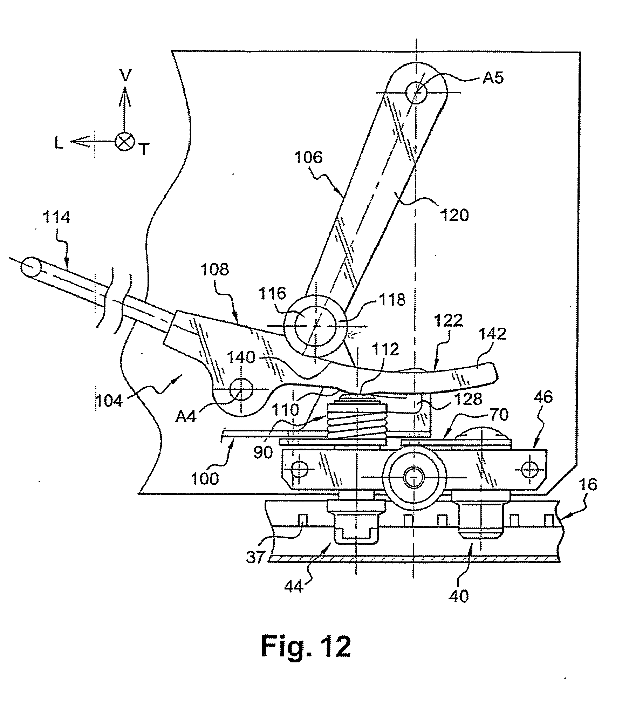

Le levier de déverrouillage 108 pivote entre une position angulaire de repos, qui est représentée sur la figure 11, dans laquelle le bossage 110 est en contact avec la portée 112 du plot de verrouillage 74, et qui correspond à la position de verrouillage du plot 74, et une position angulaire de déverrouillage, qui est représentée sur la figure 12, dans laquelle le bossage 110 exerce une force d'appui axial orientée vers le bas contre la portée 112, à l'encontre de l'effort de rappel du ressort 90, et qui correspond à la position de déverrouillage du plot 74.

Les deux leviers de déverrouillage 108 sont ici liés en pivotement à une barre de déverrouillage unique 114, qui s'étend vers l'avant sous le siège 12, et qui permet à un utilisateur de commander manuellement le déverrouillage des plots de verrouillage 74, dans les conditions habituelles de roulage.

Le mécanisme d'escamotage 106 comporte ici une barre transversale d'escamotage 116 qui est munie d'un galet de commande 118 à chacune de ses extrémités transversales.

La barre d'escamotage 116 est montée à pivotement, par rapport au socle 38, autour d'un axe transversal A5 qui est agencé ici au-dessus des chariots arrière 46.

La barre d'escamotage 116 est liée à son axe de pivotement par deux bras de liaison 120 qui s'étendent globalement verticalement.

Chaque galet de commande 118 est monté libre à rotation, sur la barre d'escamotage 116, de manière à pouvoir rouler sur une surface de commande 122 aménagée dans la face transversale supérieure du levier de déverrouillage 108 associé.

Le galet de commande 118 comporte ici deux collerettes radiales 124 qui délimitent transversalement sa bande de roulement et qui guident le galet 118 le long de la surface de commande 122.

Le galet de commande 118 et la surface de commande 122 associée forment un mécanisme à came qui permet de lier le mécanisme de déverrouillage 104 au mécanisme d'escamotage 106.

On décrira la structure de la surface de commande 122 avec le fonctionnement du mécanisme à came.

La barre d'escamotage 116 est liée en déplacement aux deux tringles de commande 100, 102.

A cet effet, chaque tringle 100, 102, comporte, à son extrémité longitudinale arrière, une aile verticale longitudinale 126 qui est munie d'une lumière de commande 128.

La barre d'escamotage 116 comporte deux pions transversaux 130 qui sont reçus respectivement dans chacune des lumières de commande 128.

Les pions transversaux 130 sont formés ici par les deux extrémités transversales d'une tige 132 qui est liée en pivotement à la barre d'escamotage 116 par deux bras associés 134.

La lumière de commande 128 a la forme d'une rainure dont la largeur est sensiblement égale au diamètre du pion transversal associé 130. Elle comporte un tronçon avant 136 qui s'étend globalement longitudinalement, en formant un arc de cercle centré sur l'axe de pivotement A5 de la barre d'escamotage 116, et un tronçon arrière vertical 138 qui s'étend globalement verticalement vers le haut.

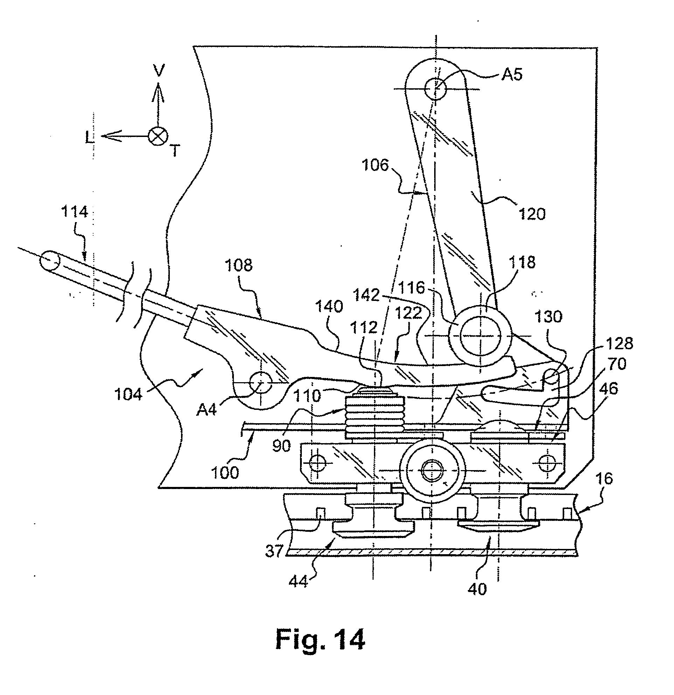

La barre d'escamotage 116 est montée à pivotement entre une position angulaire d'engagement, qui est représentée sur les figures 11 et 12, et qui correspond à la position engagée des plots de guidage 66 et de verrouillage 74, et une position angulaire d'escamotage, qui est représentée sur la figure 14, et qui correspond à la position escamotée des plots de guidage 66 et de verrouillage 74.

La barre d'escamotage 116, ou la tige 132, constitue ici un élément de manoeuvre qui permet à un utilisateur, non assis sur le siège, de commander manuellement l'escamotage des plots de guidage 66 et de verrouillage 74.

On décrit maintenant le fonctionnement du mécanisme de déverrouillage 104, lorsque le siège 12 est monté dans les glissières 16, les plots de guidage 66 occupant leur position engagée dans les glissières 16.

En partant de la position de repos verrouillée, qui est représentée sur la figure 11, l'utilisateur tire sur la barre de déverrouillage 114 vers le haut, ce qui provoque le pivotement de chaque levier de déverrouillage 108 autour de, son axe A4, dans le sens horaire en considérant la figure 11.

Le mécanisme de déverrouillage 104 étant similaire, de chaque côté du socle 38, on ne décrira ici que le fonctionnement d'un côté du socle 38.

Le bossage 110 appuie alors vers le bas sur la portée 112 de chaque plot de verrouillage 74, qui coulisse alors verticalement vers le bas, jusqu'à une position inférieure de butée qui correspond à la position basse de déverrouillage représentée sur la figure 12.

Dans la position de déverrouillage, les nervures 86 de la fourchette de verrouillage 88 sont dégagées des encoches de verrouillage 37 vers le bas, de sorte que le siège 12 n'est plus immobilisé en coulissement longitudinal.

L'utilisateur peut alors déplacer le siège 12 longitudinalement par roulement des galets 42 sur les pistes associées 34, 36 des glissières 16, en maintenant son effort sur la barre de déverrouillage 114 pour maintenir les plots de verrouillage 74 en position déverrouillée.

Lorsque l'utilisateur a réglé la position longitudinale du siège 12, il peut relâcher la barre de déverrouillage 114 de sorte que le ressort 90 puisse rappeler le plot de verrouillage 74 vers sa position haute verrouillée.

La fourchette de verrouillage 88 vient alors s'enclencher dans les encoches 37 les plus proches pour immobiliser longitudinalement le siège 12 dans sa nouvelle position.

On décrit maintenant le fonctionnement du mécanisme d'escamotage 106, à partir de la position de repos verrouillée, qui est représentée sur la figure 11.

L'utilisateur manoeuvre la barre d'escamotage 116 en la tirant vers l'arrière, depuis sa position angulaire d'engagement vers sa position angulaire d'escamotage, de sorte qu'elle pivote autour de son axe A5, dans le sens anti-horaire en considérant la figure 11.

Le mécanisme d'escamotage 106 étant similaire, de chaque côté du socle 38, on ne décrira ici que le fonctionnement d'un côté du socle 38.

Au cours d'une première partie de la course angulaire de la barre d'escamotage 116, le galet de commande 118 parcourt un tronçon d'extrémité avant 140 de la surface de commande 122, depuis sa position angulaire d'engagement jusqu'à une position angulaire intermédiaire.

Le profil du tronçon avant 140 est tel que le galet de commande 118 appuie verticalement vers le bas sur la surface de commande 122, ce qui provoque le basculement du levier de déverrouillage 108 vers sa position angulaire de déverrouillage.

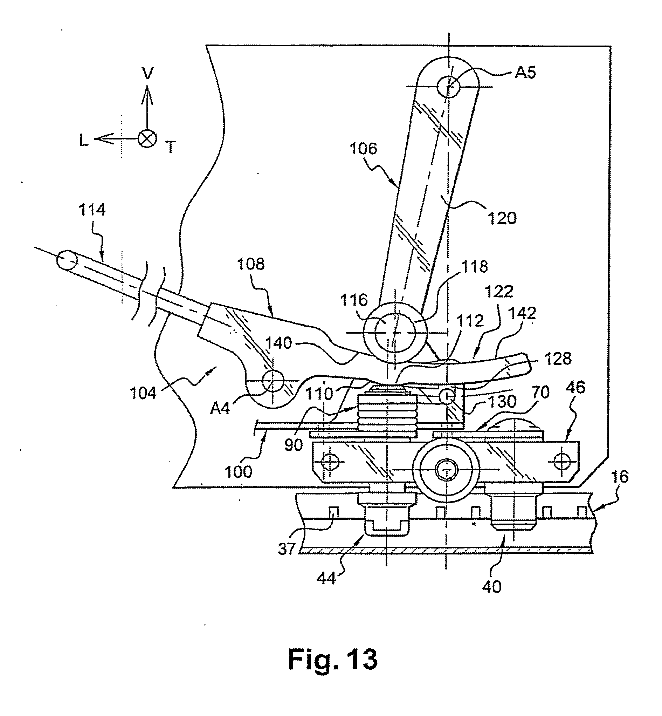

Lorsque le galet de commande 118 occupe sa position angulaire intermédiaire, il a terminé de parcourir le tronçon avant 140 de la surface de commande 122, et le plot de verrouillage 74 occupe sa position de déverrouillage, tel que représenté sur la figure 13.

Pendant la première partie de la course angulaire de la barre d'escamotage 116, le pion 130 circule dans le tronçon avant 136 de la lumière de commande 128, de sorte que le déplacement du pion 130 ne provoque aucun déplacement correspondant de la tringle de commande 100.

Au cours d'une seconde partie de la course angulaire de la barre d'escamotage 116, le galet de commande 118 parcourt un tronçon d'extrémité arrière 142 de la surface de commande 122, depuis la position angulaire intermédiaire (figure 13) jusqu'à la position angulaire d'escamotage qui est représentée sur la figure 14.

Le profil du tronçon arrière 142 dans un plan vertical longitudinal, lorsque le levier de déverrouillage 108 occupe sa positon de déverrouillage, a la forme d'un arc de cercle centré sur l'axe de pivotement A5 de la barre d'escamotage 116, de sorte que, en parcourant ce tronçon 142, le galet de commande 118 retienne le levier de déverrouillage 108 dans sa position de déverrouillage, sans provoquer un pivotement supplémentaire du levier 108.

Pendant la seconde partie de la course angulaire, le pion transversal 130 est en appui longitudinalement vers l'arrière contre le bord arrière du tronçon vertical 138 de la lumière de commande 128, de sorte que le déplacement du pion 130 vers l'arrière, avec la barre d'escamotage 116, entraîne la tringle 100 longitudinalement vers l'arrière.

Le déplacement longitudinal de la tringle 100 vers l'arrière provoque le pivotement des bras d'escamotage 70, 96 d'un quart de tour, depuis leur position engagée vers leur position escamotée.

Pendant la seconde partie de la course angulaire, le pion transversal 130 se déplace vers le haut dans le tronçon vertical 138 de la lumière de commande 128.

Ainsi, à la fin de la course angulaire de la barre d'escamotage 116, les plots de verrouillage 74 occupent à la fois leur position déverrouillée et leur position escamotée, et les plots de guidage 66 occupent leur position escamotée, tel que représenté sur la figure 14, ce qui permet de dégager le siège 12 des glissières 16 en le soulevant.

L'utilisateur peut ainsi sortir le siège 12 de l'habitacle du véhicule ou bien replacer le siège 12 à un autre endroit du plancher 14 de l'habitacle, par exemple dans une autre paire de glissières 16.

Les plots de guidage 66 servent donc à la retenue du siège 12 dans les glissières 16 et servent à permettre l'extraction du siège 12 en s'escamotant.

Pour replacer le siège 12 dans des glissières 16, il suffit d'amener le socle 38 sur une paire de glissières 16, en engageant les plots de guidage 66 et les plots de verrouillage 74 dans les rainures 28, la barre d'escamotage 116 occupant sa position angulaire d'escamotage.

Grâce à la forme tronconique des galets 42, le socle 38 se centre automatiquement sur la paire de glissière 16.

Le débattement transversal prévu pour les chariots 46 agencés d'un côté du socle 38 permet ensuite de compenser une éventuelle dispersion de parallélisme entre les glissières 16 de la paire.

Il suffit ensuite de déplacer la barre d'escamotage 116 vers sa position angulaire d'engagement pour provoquer le pivotement des plots de guidage 66 et des plots de verrouillage 74 vers leur position angulaire engagée.

Grâce à l'agencement 10 selon l'invention, le déplacement du siège 12 dans l'habitacle est facilité. Pour déplacer le siège 12 longitudinalement il suffit de le faire rouler sur les glissières 16 après déverrouillage. Le siège 12 peut être retiré et monté verticalement à n'importe quel endroit de la paire de glissières 16, soit pour le placer sur une autre paire de glissière 16, soit pour le sortir de l'habitacle du véhicule, soit pour le retourner sur la paire de glissière 16.

Le siège 12 peut être manipulé sans avoir à replier souvent le dossier, ni le basculer en configuration portefeuille, ni être obligé de déplacer les autres sièges 12 de l'habitacle.

Il n'est pas nécessaire de soulever le siège 12, lorsqu'il est désolidarisé des glissières 16, c'est-à-dire lorsque les plots de verrouillage 44 sont déverrouillés et lorsque les plots de guidage 40 sont escamotés. En effet, le siège 12 peut rouler jusqu'à une extrémité longitudinale de la paire de glissière 16, puis être saisi par l'utilisateur en position debout, à travers une ouverture de l'habitacle du véhicule.

Le siège 12 peut être entreposé à l'extérieur du véhicule sans détérioration des organes de guidage 40 et de verrouillage 44, en reposant par exemple sur les ailes de guidage 68.

Le fonctionnement des mécanismes de verrouillage 104 et d'escamotage 106 est simple, rapide et efficace.

Les organes de guidage 40 et de verrouillage 44 sont simples et légers ce qui facilite la manipulation du siège 12.

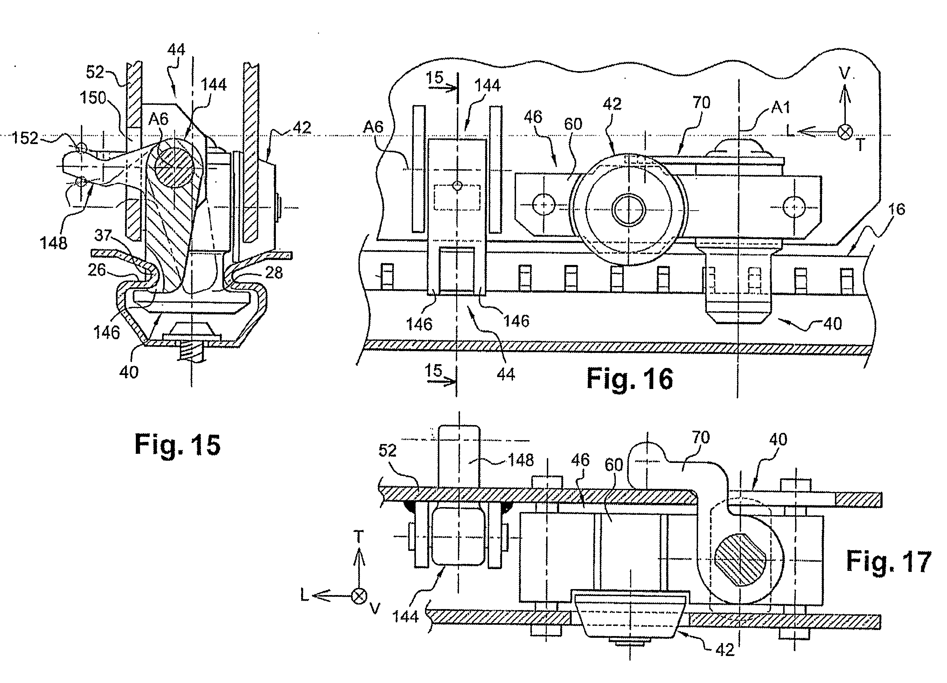

Les figures 15 à 17 illustrent une variante de réalisation de l'organe de verrouillage 44.

Selon cette variante, l'organe de verrouillage 44 comporte une fourchette de verrouillage 144 en forme de levier qui est montée pivotante autour d'un axe sensiblement longitudinal A6, par rapport au socle 38, entre une position angulaire verrouillée et engagée, qui est représentée en trait fort sur la figure 15, et une position angulaire déverrouillée et escamotée, qui est représentée en trait pointillé sur la figure 15.

Selon le mode de réalisation représenté ici, la fourchette 144 est montée à pivotement directement sur la plaque de fixation 52, et non pas sur un chariot 46.

La fourchette 144 comporte, à son extrémité inférieure, deux nervures verticales 146 qui sont prévues pour être reçues de manière complémentaire dans les encoches 37 du repli 26 interne en position engagée et verrouillée.

Les encoches 37 devront ici avoir une forme adaptée en étant formée dans le bord interne du repli 26 et non pas uniquement dans sa face inférieure 32.

Dans la position déverrouillée et escamotée, l'extrémité inférieure de la fourchette 144 est dégagée hors des encoches 37, vers le repli 24 opposé aux encoches 37, de sorte qu'elle s'étend dans la rainure 28 de la glissière 16 pour permettre à la fois le coulissement longitudinal du socle 38 dans les glissières 16 et le retrait du socle 38 hors des glissières 16.

La fourchette 144 comporte, à son extrémité supérieure, un bras de commande 148 qui s'étend globalement transversalement vers l'intérieur, à travers une fenêtre associée 150 aménagée dans la plaque de fixation 52.

Le bras de commande 148 comporte une portée 152 sur sa face transversale supérieure.

Le levier de déverrouillage 108, qui est du même type que celui décrit en référence aux figures 10 à 14, est prévu pour venir en appui par un bossage 110 sur la portée 52 du bras de commande 148, de manière à commander le pivotement de la fourchette 144 vers sa position escamotée et déverrouillée.

Un élément élastique de rappel (non représenté) est interposé de manière appropriée entre la fourchette 144 et la plaque de fixation 52, de manière à solliciter élastiquement la fourchette 144 vers sa position angulaire verrouillée et engagée.

Le fonctionnement de cette variante est similaire au mode de réalisation précédent, à l'exception du fait qu'il n'est plus nécessaire de prévoir un bras d'escamotage 96 pour provoquer l'escamotage de la fourchette 144.

Les figures 15 à 17 illustrent aussi une variante de réalisation d'un chariot 46.

Selon cette variante, le chariot 46 comporte un seul galet 42 qui est agencé du côté externe du châssis 60, par rapport au socle 38.

Pour faciliter le centrage du socle 38 par rapport à la paire de glissières 16, les galets 42 montés sur les chariots 46 associés à la glissière gauche 16 sont montés de manière inversée par rapport aux galets 42 montés sur les chariots 46 associés à la glissière droite 16.

Le fonctionnement des chariots 46 n'est pas modifié par cette variante.

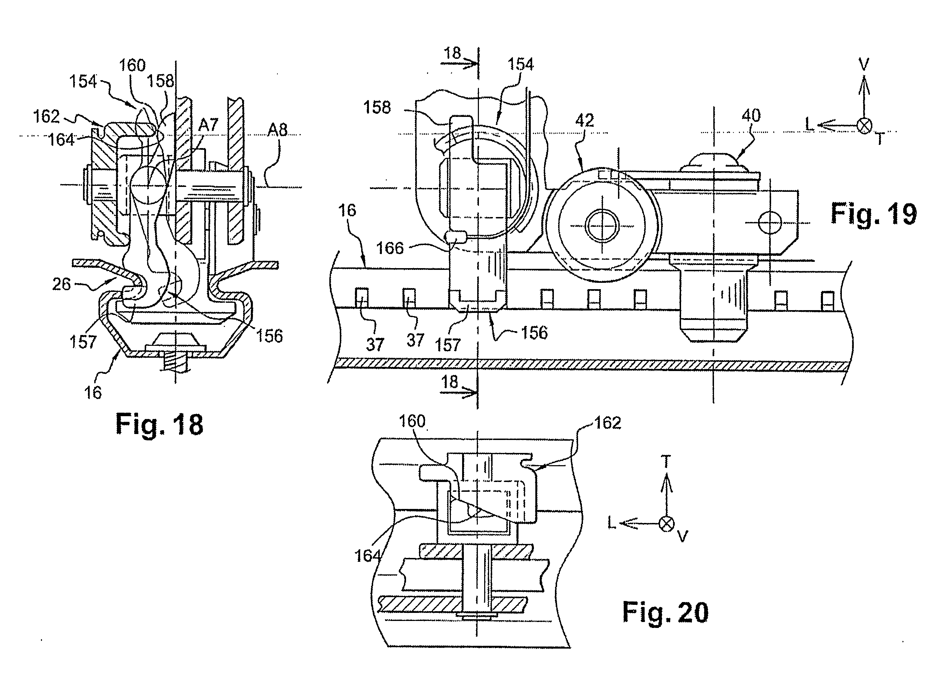

Les figures 18 à 20 illustrent un organe de verrouillage secondaire 154 qui est prévu pour immobiliser longitudinalement et retenir verticalement le socle 38 dans les glissières 16, lorsque le siège 12 est dans une configuration dite en portefeuille, c'est-à-dire que le dossier est replié sur l'assise et l'ensemble, avec le socle 38, est basculé vers l'avant.

La configuration en portefeuille vise à faciliter le rangement des sièges 12 dans l'habitacle, de manière à laisser plus d'espace sur le plancher 14.

Avantageusement, le siège 12 peut comporter deux organes de verrouillage secondaire 154 associés respectivement aux glissières 16 gauche et droite, et agencés à l'extrémité longitudinale avant du socle 38, en avant des chariots 46.

L'organe de verrouillage secondaire 154 comporte une fourchette secondaire de verrouillage 156 qui est montée à pivotement autour d'un axe longitudinal A7, par rapport au socle 38, entre une position angulaire verrouillée, qui est représentée en trait continu sur la figure 18, et une position angulaire déverrouillée, qui est représentée en trait pointillé sur la figure 18.

En position verrouillée, la fourchette secondaire 156 s'étend globalement verticalement.

L'extrémité inférieure de la fourchette secondaire 156 comporte deux nervures qui s'étendent transversalement vers l'intérieur et qui sont prévues pour être reçues de manière complémentaire dans les encoches de verrouillage 37 de la glissière 16.

L'extrémité inférieure de la fourchette secondaire 156 forme une aile de retenue 157 qui s'étend transversalement sous le repli 26, en position verrouillée, de manière à retenir verticalement le socle 38 dans la glissière 16.

L'extrémité supérieure de la fourchette secondaire 156 se prolonge verticalement par un doigt de commande 158 comportant une surface longitudinale de portée 160 orientée vers l'intérieur.

Une roue de commande 162 formant came est montée pivotante autour d'un axe transversal A8 perpendiculaire à l'axe A7 de la fourchette secondaire 156.

La roue 162 comporte une surface de commande annulaire 164 qui est adjacente à la surface de portée 160 du doigt de commande 158 et qui est prévue pour commander le pivotement de la fourchette secondaire 156, en fonction de sa position angulaire autour de l'axe A8.

Le pivotement de la roue 162 est commandé ici par un câble dont une première extrémité 166 est fixée sur une portion périphérique de la roue 162 et dont une seconde extrémité 168 est liée à une poignée 170 qui permet de tirer sur le câble pour commander la rotation de la roue autour de son axe A8.

L'organe de verrouillage secondaire 154 gauche et son dispositif de commande comportant la poignée 170 sont représentés schématiquement sur la figure 1.

Pour simplifier la représentation, les organes de verrouillage secondaire 154 n'ont pas été représentés sur la figure 2.

Un élément élastique (non représenté) est prévu pour rappeler la roue 162 vers sa position angulaire correspondant à la position déverrouillée ou à la position verrouillée.

Avantageusement, l'ensemble formé par l'organe de verrouillage secondaire 154 est monté à pivotement autour de l'axe transversal A8, par rapport au socle 38, ce qui permet d'effectuer le verrouillage secondaire lorsque le socle 38 est à plat sur le plancher 14, puis de basculer vers l'avant le siège 12 en configuration portefeuille, la fourchette secondaire 156 restant en position verrouillée.

On note que, pour pouvoir basculer le siège 12 vers l'avant, il est nécessaire de déverrouiller et d'escamoter les plots de verrouillage 74 et les plots de guidage 66 au préalable.

## Revendications

1. Agencement (10) pour le montage d'un sous-ensemble, notamment d'un siège (12), sur le plancher horizontal (14) de l'habitacle d'un véhicule automobile équipé d'au moins une paire de glissières longitudinales parallèles (16), respectivement gauche et droite, du type dans lequel chaque glissière (16) a, en section par un plan vertical transversal, globalement un profil en C ouvert vers le haut, comportant au moins un repli (24, 26) dont le bord d'extrémité libre s'étend à l'extérieur du profil, du type dans lequel le sous-ensemble (12) comporte un socle (38) qui est muni d'au moins deux organes de guidage (40) reçus en coulissement longitudinal, respectivement dans chacune des glissières (16), qui est muni d'au moins un organe de verrouillage (44) du sous-ensemble (12) dans une position longitudinale déterminée, et qui est muni de galets (42) permettant de déplacer le sous-ensemble (12) par roulement par rapport au plancher (14) de l'habitacle,
**caractérisé en ce que** chaque organe de guidage (40) comporte un plot vertical de guidage (66) qui est muni, à son extrémité inférieure, d'une aile transversale horizontale de guidage (68), et qui est monté pivotant autour d'un axe sensiblement vertical (A1), par rapport au socle (38), entre une position angulaire engagée, dans laquelle l'aile de guidage (68) s'étend transversalement sous le repli (24, 26) de la glissière (16), et une position angulaire escamotée, dans laquelle l'aile (68) est dégagée hors du repli (24, 26), de manière à permettre de dégager le socle (38) hors des glissières (16) par soulèvement,
et **en ce qu'**il comporte au moins un mécanisme d'escamotage (106) qui commande le pivotement du plot de guidage (40) entre sa position angulaire engagée et sa position angulaire escamotée.

2. Agencement (10) selon la revendication précédente, **caractérisé en ce que** chaque plot de guidage (40) est lié en pivotement à un bras d'escamotage (70), et **en ce que** le mécanisme d'escamotage (106) est lié à chaque bras (70) par une articulation (98), de manière à commander simultanément le pivotement de tous les plots de guidage (40) entre la position engagée et la position escamotée.

3. Agencement (10) selon la revendication précédente, **caractérisé en ce que** le socle (38) comporte au moins deux plots de guidage (40) associés à la glissière gauche (16) et au moins deux plots de guidage (40) associés à la glissière droite (16).

4. Agencement (10) selon la revendication précédente, **caractérisé en ce que** le mécanisme d'escamotage (106) comporte une tringle de commande gauche (100) et une tringle de commande droite (102) qui sont liées, respectivement aux bras d'escamotage (70) des plots de guidage gauche (40) et aux bras d'escamotage (70) des plots de guidage droite (40), par des articulations (98) correspondantes, de manière qu'un déplacement en translation longitudinale de chaque tringle (100, 102) provoque simultanément le pivotement de tous les plots de guidage (40) associés.

5. Agencement (10) selon l'une quelconque des revendications précédentes, **caractérisé en ce qu'**au moins un repli (24, 26) d'au moins une glissière (16) est pourvu d'encoches de verrouillage (37) prévues pour recevoir de manière complémentaire une fourchette (88, 144) portée par l'organe de verrouillage (44), en vue d'immobiliser le sous-ensemble (12) en translation longitudinale par rapport au plancher (14) du véhicule, **en ce que** la fourchette (88, 144) est montée mobile, par rapport au socle (38), entre une position verrouillée, dans laquelle des pattes (86, 146) de la fourchette (88, 144) sont engagées dans les encoches de verrouillage (37), et une position déverrouillée, dans laquelle les pattes (86, 146) de la fourchette (88, 144) sont dégagées hors des encoches de verrouillage (37), et **en ce qu'**il comporte au moins un mécanisme de déverrouillage (104) qui commande le déplacement de la fourchette (88, 144) vers sa position déverrouillée.

6. Agencement (10) selon la revendication précédente, **caractérisé en ce que** l'organe de verrouillage (44) comporte un plot vertical de verrouillage (74) qui est muni, à son extrémité inférieure, d'au moins une aile transversale horizontale (84) formant fourchette de verrouillage (88), et portant, sur sa face supérieure, au moins une patte de verrouillage (86) qui est prévue pour être reçue de manière complémentaire dans une encoche de verrouillage (37), et **en ce que** le plot de verrouillage (74) est monté coulissant suivant un axe vertical (A2), par rapport au socle (38), entre une position haute verrouillée, dans laquelle la patte (86) de la fourchette (88) est reçue dans une encoche de verrouillage (37), et une position basse déverrouillée, dans laquelle la patte (86) de la fourchette (88) est dégagée vers le bas hors des encoches de verrouillage (37).

7. Agencement (10) selon la revendication précédente, **caractérisé en ce qu'**un élément élastique de rappel (90) est interposé axialement entre une portion (90) du plot de verrouillage (74) et une portion (94) du socle (38), de manière à solliciter élastiquement le plot de verrouillage (74) vers sa position haute verrouillée, et **en ce que** le mécanisme de déverrouillage (104) comporte un levier (108) qui vient en appui axial contre une portée (112) aménagée dans l'extrémité supérieure du plot de verrouillage (74), et qui pivote entre une position angulaire de repos et une position angulaire de déverrouillage provoquant le coulissement axial du plot de verrouillage (74) vers sa position déverrouillée, à l'encontre de l'effort de rappel de l'élément élastique (90).

8. Agencement (10) selon la revendication 6 ou 7 prises en combinaison avec la revendication 2, **caractérisé en ce que** le plot de verrouillage (74) est monté pivotant autour d'un axe sensiblement vertical (A2), par rapport au socle (38), entre une position angulaire engagée, dans laquelle la fourchette (88) s'étend transversalement sous le repli (34, 36) de la glissière (16), et une position angulaire escamotée, dans laquelle la fourchette (88) est dégagée hors du repli (24, 26), de manière à permettre de dégager le socle (38) hors des glissières (16) par soulèvement, **en ce que** le plot de verrouillage (74) est lié en pivotement à un bras d'escamotage (96), et **en ce que** le mécanisme d'escamotage (106) est lié au bras d'escamotage (96) du plot de verrouillage (74) par une articulation (98), de manière à commander simultanément le pivotement des plots de guidage (66) et des plots de verrouillage (74) entre leur position engagée et leur position escamotée.

9. Agencement (10) selon l'une quelconque des revendications 6 à 8, du type dans lequel la glissière (16) comporte deux replis (24, 26) qui sont chacun pourvus d'encoches de verrouillage (37), **caractérisé en ce que** la fourchette de verrouillage (88) comporte deux ailes transversales horizontales (84) qui sont agencées de part et d'autre du plot de verrouillage (74), qui sont pourvues chacune d'au moins une nervure (86) formant patte de verrouillage sur la face supérieure de la fourchette (88), et **en ce que**, en position verrouillée, les nervures (86) s'étendent globalement suivant une direction transversale.

10. Agencement (10) selon la revendication 5, **caractérisé en ce que** la fourchette de verrouillage (144) est montée pivotante autour d'un axe sensiblement longitudinal (A6), par rapport au socle (38), entre une position angulaire verrouillée et engagée, dans laquelle les pattes (146) de la fourchette (144) sont reçues dans les encoches (37) de la glissière (16), et une position angulaire déverrouillée et escamotée, dans laquelle les pattes (146) de la fourchette (144) sont dégagées hors des encoches (37), **en ce qu'**un élément élastique de rappel est interposé entre une portion de la fourchette (144) et une portion du socle (38), de manière à solliciter élastiquement la fourchette (144) vers sa position angulaire verrouillée et engagée, et **en ce que** le mécanisme de déverrouillage (104) comporte un levier (108) qui vient en appui axial contre une portée (152) aménagée dans une portion (148) de la fourchette (144), et qui pivote entre une position angulaire de repos et une position angulaire de déverrouillage provoquant le pivotement de la fourchette (144) vers sa position déverrouillée et dégagée, à l'encontre de l'effort de rappel de l'élément élastique.

11. Agencement (10) selon l'une quelconque des revendications 5 à 10, **caractérisé en ce que** le mécanisme d'escamotage (106) est lié au mécanisme de déverrouillage (104) par un mécanisme à came (108, 116, 118), de manière à provoquer le déverrouillage de l'organe de verrouillage (44) au plus tard à la fin de l'escamotage des organes de guidage (40) et de l'organe de verrouillage (44).

12. Agencement (10) selon la revendication précédente prise en combinaison avec la revendication 7 ou 10, **caractérisé en ce que** le mécanisme d'escamotage (106) comporte une barre transversale d'escamotage (116) pivotant autour d'un axe transversal (A5) entre une position angulaire d'engagement et une position angulaire d'escamotage, et **en ce que** le levier de déverrouillage (108) comporte une surface de commande (122) qui coopère par contact avec un dispositif suiveur de came (118) lié en pivotement à la barre d'escamotage (116), de manière que le pivotement de la barre d'escamotage (116) vers sa position d'escamotage provoque le basculement du levier de déverrouillage (108) vers sa position de déverrouillage.

13. Agencement (10) selon la revendication précédente, prise en combinaison avec la revendication 4, **caractérisé en ce qu'**au moins une tringle de commande (100, 102) comporte une lumière de commande (128) prévue pour recevoir un pion (130) lié en déplacement longitudinal à la barre d'escamotage (116) de manière que, au cours d'une première course angulaire de la barre d'escamotage (116), le pion (130) se déplace dans la lumière de commande (128) sans provoquer de déplacement correspondant des tringles (100, 102), et de manière que, au cours d'une seconde course angulaire de la barre d'escamotage (116), le pion (130) vienne en appui contre un bord de la lumière de commande (128) pour provoquer un déplacement longitudinal des tringles (100, 102) vers leur position correspondant à l'escamotage des plots de guidage (66) et des plots de verrouillage (74).

14. Agencement (10) selon l'une quelconque des revendications précédentes, **caractérisé en ce que** chaque glissière (16) comporte, sur sa face externe supérieure, au moins une piste de roulement longitudinale (34, 36) qui est inclinée, transversalement à la direction longitudinale (L), suivant une pente inversée par rapport à la glissière associée (16), et **en ce que** la bande de roulement (43) de chaque galet (42) a une forme globalement tronconique qui est sensiblement complémentaire de la piste de roulement (34, 36) de la glissière associée (16), de manière à permettre le centrage du sous-ensemble (12) par rapport à la paire de glissières (16), lors de la mise en place des organes de guidage (40) dans les glissières (16).

15. Agencement (10) selon la revendication précédente, **caractérisé en ce que** les galets (42) associés à la glissière droite (126), ou à la glissière gauche (16), sont montés avec un débattement transversal de valeur déterminée, par rapport au socle (38), de manière à compenser une dispersion de parallélisme entre les deux glissières (16).

16. Agencement (10) selon l'une quelconque des revendications précédentes 6 à 15 prise en combinaison avec la revendication 5, **caractérisé en ce que** le socle (38) comporte deux organes de verrouillage secondaires (154) qui sont agencés à une extrémité longitudinale du socle (38) et qui sont prévus pour coopérer chacun avec les encoches de verrouillage (37) d'une glissière (16) distincte de manière à retenir verticalement et longitudinalement le sous-ensemble (12) sur le plancher (14) de l'habitacle, lorsque le sous-ensemble (12) occupe une position basculée longitudinalement vers l'avant ou vers l'arrière.

## Claims

1. Arrangement (10) for the mounting of a subassembly, notably of a seat (12), on the horizontal floor (14) of the passenger compartment of a motor vehicle fitted with at least one pair of, respectively left and right, parallel longitudinal runners (16), of the type in which each runner (16) has, in section through a vertical transverse plane, generally a C-shaped profile that is open upwards, comprising at least one fold (24, 26) of which the free-end edge extends to the outside of the profile, of the type in which the subassembly (12) comprises a base (38) that is furnished with at least two guide members (40) received so as to slide longitudinally, respectively in each of the runners (16), that is furnished with at least one locking member (44) for locking the subassembly (12) in a determined longitudinal position, and that is furnished with rollers (42) making it possible to move the subassembly (12) by rolling relative to the floor (14) of the passenger compartment,
**characterized in that** each guide member (40) comprises a vertical guide post (66) that is furnished, at its bottom end, with a horizontal transverse guide flange (68) and that is mounted so as to pivot about a substantially vertical axis (A1), relative to the base (38) between an engaged angular position, in which the guide flange (68) extends transversely beneath the fold (24, 26) of the runner (16) and a retracted angular position, in which the flange (68) is disengaged from the fold (24, 26) so as to make it possible to disengage the base (38) from the runners (16) by raising,
and **in that** it comprises at least one retraction mechanism (106) which controls the pivoting of the guide post (40) between its engaged angular position and its retracted angular position.

2. Arrangement (10) according to the preceding claim, **characterized in that** each guide post (40) is pivotingly linked to a retraction arm (70), and **in that** the retraction mechanism (106) is linked to each arm (70) by an articulation (98) so as to simultaneously control the pivoting of all the guide posts (40) between the engaged position and the retracted position.

3. Arrangement (10) according to the preceding claim, **characterized in that** the base (38) comprises at least two guide posts (40) associated with the left runner (16) and at least two guide posts (40) associated with the right runner (16).

4. Arrangement (10) according to the preceding claim, **characterized in that** the retraction mechanism (106) comprises a left control rod (100) and a right control rod (102) that are linked respectively to the retraction arms (70) of the left guide posts (40) and to the retraction arms (70) of the right guide posts (40) by corresponding articulations (98) so that a movement in longitudinal translation of each rod (100, 102) simultaneously causes all the associated guide posts (40) to pivot.

5. Arrangement (10) according to any one of the preceding claims, **characterized in that** at least one fold (24, 26) of at least one runner (16) is provided with locking notches (37) designed to receive in a complementary manner a fork (88, 144) supported by the locking member (44) for the purpose of immobilizing the subassembly (12) in longitudinal translation relative to the floor (14) of the vehicle, **in that** the fork (88, 144) is mounted so as to be able to move, relative to the base (38), between a locked position, in which lugs (86, 146) of the fork (88, 144) are engaged in the locking notches (37), and an unlocked position in which the lugs (86, 146) of the fork (88, 144) are disengaged from the locking notches (37), and **in that** it comprises at least one unlocking mechanism (104) which controls the movement of the fork (88, 144) to its unlocked position.

6. Arrangement (10) according to the preceding claim, **characterized in that** the locking member (44) comprises a vertical locking post (74) that is furnished, at its bottom end, with at least one horizontal transverse flange (84) forming a locking fork (88), and supporting, on its top face, at least one locking lug (86) that is designed to be received in a complementary manner in a locking notch (37), and **in that** the locking post (74) is mounted so as to slide along a vertical axis (A2), relative to the base (38) between a high locked position, in which the lug (86) of the fork (88) is received in a locking notch (37), and a low unlocked position in which the lug (86) of the fork (88) is disengaged downwards from the locking notches (37).

7. Arrangement (10) according to the preceding claim, **characterized in that** an elastic return element (90) is interposed axially between a portion (90) of the locking post (74) and a portion (94) of the base (38), so as to elastically force the locking post (74) towards its high locked position, and **in that** the unlocking mechanism (104) comprises a lever (108) which presses axially against a bearing surface (112) arranged in the top end of the locking post (74) and which pivots between an angular rest position and an angular unlocked position causing the locking post (74) to slide axially towards its unlocked position, against the return force of the elastic element (90).

8. Arrangement (10) according to Claim 6 or 7 taken in combination with Claim 2, **characterized in that** the locking post (74) is mounted so as to pivot about a substantially vertical axis (A2), relative to the base (38), between an angular engaged position, in which the fork (88) extends transversely beneath the fold (34, 36) of the runner (16) and an angular retracted position in which the fork (88) is disengaged from the fold (24, 26) so as to make it possible to disengage the base (38) from the runners (16) by raising, **in that** the locking post (74) is linked pivotingly to a retraction arm (96), and **in that** the retraction mechanism (106) is linked to the retraction arm (96) of the locking post (74) by an articulation (98), so as to simultaneously control the pivoting of the guide posts (66) and of the locking posts (74) between their engaged position and their retracted position.

9. Arrangement (10) according to any one of Claims 6 to 8, of the type in which the runner (16) comprises two folds (24, 26) which are each provided with locking notches (37), **characterized in that** the locking fork (88) comprises two horizontal transverse flanges (84) which are arranged on either side of the locking post (74), which are each provided with at least one rib (86) forming a locking lug on the top face of the fork (88), and **in that**, in the locked position, the ribs (86) extend generally in a transverse direction.

10. Arrangement (10) according to Claim 5, **characterized in that** the locking fork (144) is mounted so as to pivot about a substantially longitudinal axis (A6), relative to the base (38), between an angular locked and engaged position, in which the lugs (146) of the fork (144) are received in the notches (37) of the runner (16), and an angular unlocked and retracted position, in which the lugs (146) of the fork (144) are disengaged from the notches (37), **in that** an elastic return element is interposed between a portion of the fork (144) and a portion of the base (38) so as to elastically force the fork (144) to its angular locked and engaged position, and **in that** the unlocking mechanism (104) comprises a lever (108) which presses axially against a bearing surface (152) arranged in a portion (148) of the fork (144) and which pivots between an angular rest position and an angular unlocked position causing the fork (144) to pivot towards its unlocked and disengaged position, against the return force of the elastic element.

11. Arrangement (10) according to any one of Claims 5 to 10, **characterized in that** the retraction mechanism (106) is linked to the unlocking mechanism (104) by a cam mechanism (108, 116, 118) so as to cause the unlocking of the locking member (44) at the latest at the end of the retraction of the guide members (40) and of the locking member (44).

12. Arrangement (10) according to the preceding claim taken in combination with Claim 7 or 10, **characterized in that** the retraction mechanism (106) comprises a transverse retraction bar (116) pivoting about a transverse axis (A5) between an angular engagement position and an angular retraction position, and **in that** the unlocking lever (108) comprises a control surface (122) which interacts by contact with a cam follower device (118) pivotingly linked to the retraction bar (116) so that the pivoting of the retraction bar (116) towards its retraction position causes the tilting of the unlocking lever (108) to its unlocked position.

13. Arrangement (10) according to the preceding claim, taken in combination with Claim 4, **characterized in that** at least one control rod (100, 102) comprises a control aperture (128) designed to receive a pin (130) linked in longitudinal movement to the retraction bar (116) so that, during a first angular travel of the retraction bar (116), the pin (130) moves in the control aperture (128) without causing the corresponding movement of the rods (100, 102) and so that, during a second angular travel of the retraction bar (116) the pin (130) presses against an edge of the control aperture (128) in order to cause a longitudinal movement of the rods (100, 112) to their position corresponding to the retraction of the guide posts (66) and of the locking posts (74).

14. Arrangement (10) according to any one of the preceding claims, **characterized in that** each runner (16) comprises, on its top outer face, at least one longitudinal running track (34, 36) that is inclined, transversely to the longitudinal direction (L), along a slope that is inverted relative to the associated runner (16), and **in that** the tread (43) of each roller (42) has a generally frustoconical shape that is substantially complementary to the running track (34, 36) of the associated runner (16), so as to allow the subassembly (12) to be centred relative to the pair of runners (16), when the guide members (40) are placed in the runners (16).

15. Arrangement (10) according to the preceding claim, **characterized in that** the rollers (42) associated with the right runner (126) or with the left runner (16) are mounted with a transverse clearance of determined value relative to the base (38) so as to compensate for a dispersion of parallelism between the two runners (16).

16. Arrangement (10) according to any one of the preceding Claims 6 to 15, taken in combination with Claim 5, **characterized in that** the base (38) comprises two secondary locking members (154) which are arranged at a longitudinal end of the base (38) and which are designed to each interact with the locking notches (37) of a distinct runner (16) so as to retain vertically and longitudinally the subassembly (12) on the floor (14) of the passenger compartment when the subassembly (12) occupies a position tilted longitudinally forwards or backwards.

## Patentansprüche

1. Anordnung (10) für die Montage einer Unterbaugruppe, insbesondere eines Sitzes (12) auf dem horizontalen Fußboden (14) der Fahrgastzelle eines Kraftfahrzeugs, das mit mindestens einem Paar parallelen Längsgleitschienen (16), jeweils einer linken und einer rechten des Typs ausgestattet ist, bei dem jede Gleitschiene (16) im Querschnitt durch eine vertikale Querebene global ein C-Profil, das nach oben offen ist, hat, das mindestens einen Saum (24, 26) aufweist, dessen freier Endrand sich außerhalb des Profils erstreckt, des Typs, bei dem die Unterbaugruppe (12) einen Sockel (38) aufweist, der mit mindestens zwei Organen (40) versehen ist, die jeweils unter Längsgleiten in jeder der Gleitschienen (16) aufgenommen sind, die mit mindestens einem Verriegelungsorgan (44) der Unterbaugruppe (12) in einer bestimmten Längsposition versehen ist, und die mit Walzen (42) versehen ist, die es erlauben, die Unterbaugruppe (12) durch Rollen in Bezug zu dem Fußboden (14) der Fahrgastzelle zu verlagern,
**dadurch gekennzeichnet, dass** jedes Organ (40) einen vertikalen Führungsblock (66) aufweist, der an seinem unteren Ende mit einem horizontalen Führungsquerflügel (68) versehen ist, und der um eine im Wesentlichen vertikale Achse (A1) in Bezug zu dem Sockel (38) zwischen einer eingefügten Winkelposition, in der sich der Führungsflügel (68) quer unter dem Saum (24, 26) der Gleitschiene (16) erstreckt, und einer eingezogenen Winkelposition, in der der Flügel (68) aus dem Saum (24, 26) freigegeben ist, derart schwenkend montiert ist, dass das Freigeben des Sockels (38) aus den Gleitschienen (16) durch Anheben erlaubt wird,
und dass sie mindestens einen Einziehmechanismus (106) aufweist, der das Schwenken des Führungsblocks (40) zwischen seiner eingefügten Winkelposition und seiner eingezogenen Winkelposition steuert.

2. Anordnung (10) nach dem vorhergehenden Anspruch, **dadurch gekennzeichnet, dass** jeder Führungsblock (40) beim Schwenken mit einem Einzieharm (70) verbunden ist, und dass der Einziehmechanismus (106) mit jedem Arm (70) durch ein Gelenk (98) derart verbunden ist, dass er gleichzeitig das Schwenken aller Führungsblöcke (40) zwischen der eingefügten Position und der eingezogenen Position steuert.

3. Anordnung (10) nach dem vorhergehenden Anspruch, **dadurch gekennzeichnet, dass** der Sockel (38) mindestens zwei Führungsblöcke (40) aufweist, die zu der linken Gleitschienen (16) gehören, und mindestens zwei Führungsblöcke (40), die zu der rechten Gleitschiene (16) gehören.

4. Anordnung (10) nach dem vorhergehenden Anspruch, **dadurch gekennzeichnet, dass** der Einziehmechanismus (106) eine linke Steuerstange (100) und eine rechte Steuerstange (102) aufweist, die jeweils mit den Einzieharmen (70) der linken Führungsblöcke (40) und den Einzieharmen (70) der rechten Führungsblöcke (40) durch entsprechende Gelenke (98) derart verbunden sind, dass eine Längsverschiebungsbewegung jeder Stange (100, 102) gleichzeitig das Schwenken aller dazugehörenden Führungsblöcke (40) bewirkt.

5. Anordnung (10) nach einem der vorhergehenden Ansprüche, **dadurch gekennzeichnet, dass** mindestens ein Saum (24, 26) mindestens einer Gleitschiene (16) mit Verriegelungskerben (37) versehen ist, die vorgesehen sind, um komplementär eine Gabel (88, 144) aufzunehmen, die von dem Verriegelungsorgan (44) getragen wird, um die Unterbaugruppe (12) in Längsverschiebung in Bezug zu dem Fußboden (14) des Fahrzeugs stillzustellen, dass die Gabel (88, 144) in Bezug zu dem Sockel (38) zwischen einer verriegelten Position, in der Pratzen (86, 146) der Gabel (88, 144) in die Verriegelungskerben (37) eingreifen, und einer entriegelten Position, in der die Pratzen (86, 146) der Gabel (88, 144) aus den Verriegelungskerben (37) freigegeben sind, beweglich montiert ist, und dass sie mindestens einen Entriegelungsmechanismus (104) aufweist, der die Bewegung der Gabel (88, 144) zu ihrer entriegelten Position steuert.

6. Anordnung (10) nach dem vorhergehenden Anspruch, **dadurch gekennzeichnet, dass** das Verriegelungsorgan (44) einen vertikalen Verriegelungsblock (74) aufweist, der an seinem unteren Ende mit mindestens einem horizontalen Querflügel (84), der eine Verriegelungsgabel (88) bildet, versehen ist, und der auf seiner oberen Seite mindestens eine Verriegelungspratze (86) aufweist, die vorgesehen ist, um komplementär in einer Verriegelungskerbe (37) aufgenommen zu werden, und dass der Verriegelungsblock (74) entlang einer vertikalen Achse (A2) in Bezug zu dem Sockel (38) zwischen einer oberen verriegelten Position, in der die Pratze (86) der Gabel (88) in einer Verriegelungskerbe (37) aufgenommen ist, und einer unteren entriegelten Position, in der die Pratze (86) der Gabel (88) nach unten aus den Verriegelungskerben (37) befreit wird, gleitend montiert ist.

7. Anordnung (10) nach dem vorhergehenden Anspruch, **dadurch gekennzeichnet, dass** ein elastisches Rückholelement (90) axial zwischen einen Abschnitt (90) des Verriegelungsblocks (74) und einen Abschnitt (94) des Sockels (38) derart eingefügt ist, dass der Verriegelungsblock (74) zu seiner oberen verriegelten Position beansprucht wird, und dass der Entriegelungsmechanismus (104) einen Hebel (108) aufweist, der gegen eine Auflage (112), die in dem oberen Ende des Verriegelungsblocks (74) eingerichtet ist, axial zum Aufliegen kommt, und der zwischen einer Ruhewinkelposition und einer Entriegelungswinkelposition schwenkt, wobei das axiale Gleiten des Verriegelungsblocks (74) zu seiner entriegelten Position gegen die Rückholkraft des elastischen Elements (90) verursacht wird.

8. Anordnung (10) nach Anspruch 6 oder 7, kombiniert mit Anspruch 2 genommen, **dadurch gekennzeichnet, dass** der Verriegelungsblock (74) um eine im Wesentlichen vertikale Achse (A2) in Bezug zu dem Sockel (38) zwischen einer eingefügten Winkelposition, in der sich die Gabel (88) quer unter dem Saum (34, 36) der Gleitschiene (16) erstreckt, und einer eingezogenen Winkelposition, in der die Gabel (88) aus dem Saum (24, 26) befreit ist, schwenkend montiert ist, so dass es erlaubt ist, den Sockel (38) aus den Gleitschienen (16) durch Anheben zu befreien, und dass der Verriegelungsblock (74) mit einem Einzieharm (96) schwenkend verbunden ist, und dass der Einziehmechanismus (106) mit dem Einzieharm (96) des Verriegelungsblocks (74) durch ein Gelenk (98) derart verbunden ist, dass gleichzeitig das Schwenken der Führungsblöcke (66) und der Verriegelungsblöcke (74) zwischen ihrer eingefügten Position und ihrer eingezogenen Position gesteuert wird.

9. Anordnung (10) nach einem der Ansprüche 6 bis 8, des Typs, bei dem die Gleitschiene (16) zwei Säume (24, 26) aufweist, die jeweils mit Verriegelungskerben (37) versehen sind, **dadurch gekennzeichnet, dass** die Verriegelungskerbe (88) zwei horizontale Querflügel (84) aufweist, die zu beiden Seiten des Verriegelungsblocks (74) eingerichtet sind, die jeweils mit mindestens einer Rippe (86), die eine Verriegelungspratze auf der oberen Seite der Gabel (88) bildet, versehen sind, und dass sich die Rippen (86) in verriegelter Position insgesamt entlang einer Querrichtung erstrecken.

10. Anordnung (10) nach Anspruch 5, **dadurch gekennzeichnet, dass** die Verriegelungsgabel (144) um eine im Wesentlichen Längsachse (A6) in Bezug zu dem Sockel (38) zwischen einer verriegelten und eingefügten Winkelposition, in der die Pratzen (146) der Gabel (144) in den Kerben (37) der Gleitschiene (16) aufgenommen sind, und einer entriegelten und eingezogenen Winkelposition, in der die Pratzen (146) der Gabel (144) aus den Kerben (37) befreit sind, schwenkend montiert ist, und dass ein elastisches Rückholelement zwischen einen Abschnitt der Gabel (144) und einen Abschnitt des Sockels (38) derart eingefügt ist, dass die Gabel (144) elastisch zu ihrer verriegelten und eingeführten Winkelposition beansprucht wird, und dass der Entriegelungsmechanismus (104) einen Hebel (108) aufweist, der gegen eine Auflage (152), die in einem Abschnitt (148) der Gabel (144) eingerichtet ist, zum axialen Aufliegen kommt, und der zwischen einer Ruhewinkelposition und einer Entriegelungswinkelposition schwenkt, die das Schwenken der Gabel (144) zu ihrer entriegelten und freigegebenen Position gegen die Rückholkraft des elastischen Elements bewirkt.

11. Anordnung (10) nach einem der Ansprüche 5 bis 10, **dadurch gekennzeichnet, dass** der Einziehmechanismus (106) mit dem Entriegelungsmechanismus (104) durch einen Nockenmechanismus (108, 116, 118) derart verbunden ist, dass das Entriegeln des Verriegelungsorgans (44) spätestens an dem Ende des Einziehens der Führungsorgane (40) und des Verriegelungsorgans (44) verursacht wird.

12. Anordnung (10) nach dem vorhergehenden Anspruch kombiniert mit Anspruch 7 oder 10, **dadurch gekennzeichnet, dass** der Einziehmechanismus (106) eine einzige Querstange (116) aufweist, die um eine Querachse (A5) zwischen einer Einführwinkelposition und einer Einziehwinkelposition schwenkt, und dass der Entriegelungshebel (108) eine Steuerfläche (122) aufweist, die durch Berührung mit einer Kurvenrolle (118), die unter Schwenken mit der Einziehstange (116) verbunden ist, derart zusammenwirkt, dass das Schwenken der Einziehstange (116) zu ihrer Einziehposition das Kippen des Entriegelungshebels (108) zu seiner Entriegelungsposition verursacht.

13. Anordnung (10) nach dem vorhergehenden Anspruch, kombiniert genommen mit Anspruch 4, **dadurch gekennzeichnet, dass** mindestens eine Steuerstange (100, 102) eine Steuerlängsöffnung (128) aufweist, die vorgesehen ist, um einen Zapfen (130) aufzunehmen, der in Längsbewegung mit der Einziehstange (116) derart verbunden ist, dass sich der Zapfen (130) im Laufe eines ersten Winkelhubs der Einziehstange (116) in dem Steuerlangloch (128) verlagert, ohne eine entsprechende Bewegung der Stangen (100, 102) zu verursachen, und derart, dass der Zapfen (130) im Laufe eines zweiten Winkelhubs der Einziehstange (116) gegen einen Rand des Steuerlanglochs (128) zum Aufliegen kommt, um eine Längsbewegung der Stangen (100, 102) zu ihrer Position, die dem Einziehen der Führungsblöcke (66) und der Verriegelungsblöcke (74) entspricht, zu verursachen.

14. Anordnung (10) nach einem der vorhergehenden Ansprüche, **dadurch gekennzeichnet, dass** die Gleitschiene (16) auf ihrer oberen Außenseite mindestens eine Längslaufbahn (34, 36) aufweist, die schräg ist, quer zu der Längsrichtung (L) entlang einer in Bezug zu der dazugehörenden Gleitschiene (16) umgekehrten Schräge, und dass die Laufbahn (43) jeder Walze (42) eine insgesamt kegelstumpfförmige Form hat, die im Wesentlichen zu der Laufbahn (34, 36) der dazugehörenden Gleitschiene (16) komplementär ist, so dass das Zentrieren der Unterbaugruppe (12) in Bezug zu dem Paar Gleitschienen (16) bei dem Anbringen der Führungsorgane (40) in den Gleitschienen (16) erlaubt wird.

15. Anordnung (10) nach dem vorhergehenden Anspruch, **dadurch gekennzeichnet, dass** die Walzen (42), die zu der rechten Gleitschiene (126) oder der linken Gleitschiene (16) gehören, mit einem Querschlagen mit bestimmten Wert in Bezug zu dem Sockel (38) montiert sind, um eine Streuung der Parallelität zwischen den zwei Gleitschienen (16) auszugleichen.

16. Anordnung (10) nach einem der vorhergehenden Ansprüche 6-15, kombiniert genommen mit Anspruch 5, **dadurch gekennzeichnet, dass** der Sockel (38) zwei Sekundärentriegelungsorgane (154) aufweist, die an einem Längsende des Sockels (38) eingerichtet sind, und die vorgesehen sind, um jeweils mit den Verriegelungskerben (37) einer einzelnen Gleitschiene (16) derart zusammenzuwirken, dass die Unterbaugruppe (12) auf dem Fußboden (14) der Fahrgastzelle vertikal und längs zurückgehalten wird, wenn die Unterbaugruppe (12) eine längs zur Vorderseite oder zur Rückseite gekippte Position belegt.
